(19) Europäisches Patentamt
European Patent Office
Office européen des brevets

(11) Veröffentlichungsnummer: **0 057 858**
**B1**

(12) # EUROPÄISCHE PATENTSCHRIFT

(45) Veröffentlichungstag der Patentschrift: **29.05.85**

(51) Int. Cl.⁴: **C 07 F 7/08**

(21) Anmeldenummer: **82100569.1**

(22) Anmeldetag: **28.01.82**

(54) **Verfahren zur Herstellung von aromatischen Silanen.**

(30) Priorität: **07.02.81 DE 3104326**

(43) Veröffentlichungstag der Anmeldung: **18.08.82 Patentblatt 82/33**

(45) Bekanntmachung des Hinweises auf die Patenterteilung: **29.05.85 Patentblatt 85/22**

(84) Benannte Vertragsstaaten: **BE CH DE FR GB IT LI NL**

(56) Entgegenhaltungen:
**US - A - 3 772 347**

**SYNTHESIS, Nr. 11, November 1979, Stuttgart, D. HÄBICH et al. "Preparation of aryl- and heteroaryltrimethylsilanes", Seiten 841-876**
**Chemical Abstracts Band 96, Nr. 9, 1. März 1982, Columbus, Ohio, USA, Abstract Nr. 69203t**

(73) Patentinhaber: **BASF Aktiengesellschaft, Carl-Bosch-Strasse 38, D-6700 Ludwigshafen (DE)**

(72) Erfinder: **Acker, Rolf-Dieter, Dr., Tuchbleiche 8, D-6906 Leimen (DE)**
Erfinder: **Hamprecht, Gerhard, Dr., Rote-Turm-Strasse 28, D-6940 Weinheim (DE)**
Erfinder: **Mueller, Franz-Josef, Dr., Mueller-Thurgau-Weg 1, D-6706 Wachenheim (DE)**

**EP 0 057 858 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein neues Verfahren zur Herstellung von aromatischen Silanen durch Umsetzung von aromatischen Halogenverbindungen mit einem Disilan in Gegenwart von Palladiumkomplexverbindungen und Phosphiten bzw. Phosphinen.

Zur Darstellung von aromatischen Silicium-Verbindungen sind folgende Verfahren bekannt: Die Umsetzung von Halogenaromaten mit Alkalimetallen, insbesondere Lithium und Natrium, und Chlorsilanen oder die Reaktion von Halogenaromaten mit Magnesium und Chlorsilanen im Sinne einer Grignard-Reaktion (Synthesis (Review) 1979 (11) 841—876, insbesondere 843). Die Spaltung von Hexamethyldisilan mit Kalium-t-butylat und anschließender Substitution an Halogenaromaten durch den Trimethylsilylrest führt ebenfalls zu Silylaromaten. Alle diese Verfahren haben den Nachteil drastischer basischer Reaktionsbedingungen bei zum Teil unbefriedigenden Ausbeuten. Die Anwendung dieser Reaktion bei basenempfindlichen funktionellen Aromatensubstituenten, wie sie z. B. Nitro-, Cyano- oder Carbonester-Substituenten darstellen, ist meist nicht möglich.

Es ist weiterhin bekannt, daß Nitrohalogenbenzole mit Tetrakis(triphenylphosphin)palladium als Katalysator bei Einsatz von 1,8 bis 2,5 Äquivalenten Hexamethyldisilan pro Nitrohalogenaromat Nitriphenyltrimethylsilane ergeben (H. Matsumoto, K. Yoshihiro, S. Nagashima, H. Watanabe und Y. Nagai, J. Organomet. Chem. 128 (1977), 409—413). Zur Erreichung guter Ausbeuten wird dort die in einem Glasrohr unter Inertgas angesetzte Reaktionsmischung mit flüssigem Stickstoff abgekühlt, das Glasrohr evakuiert und dann abgeschmolzen, um es anschließend auf 150°C während 40 Stunden zu erhitzen. Das als Katalysator benötigte Tetrakis(triphenylphosphin)palladium ist in reiner Form nur unter größerem präparativen Aufwand zu gewinnen und ist in Lösung stark oxidationsempfindlich (vgl. Inorganic Synthesis, Vol. XIII, Seiten 121—123).

Es wurde nun gefunden, daß man aromatische Silane der Formel

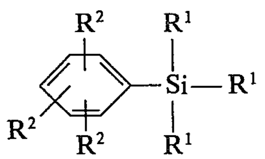

(I)

worin die einzelnen Reste $R^1$ und $R^2$ gleich oder verschieden sein können und jeweils einen aliphatischen, cycloaliphatischen, araliphatischen oder aromatischen Rest bedeuten, darüber hinaus die Reste $R^2$ auch jeweils ein Wasserstoffatom, ein Fluoratom, eine Nitrogruppe, eine Cyangruppe, den Rest

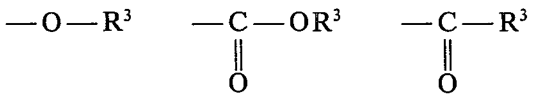

bezeichnen, worin $R^3$ für einen aliphatischen, cycloaliphatischen, araliphatischen oder aromatischen Rest steht, vorteilhaft erhält, wenn man aromatische Halogenverbindungen der Formel

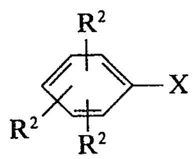

(II)

worin $R^2$ die vorgenannte Bedeutung besitzt und X ein Halogenatom bezeichnet, mit einem Disilan der Formel

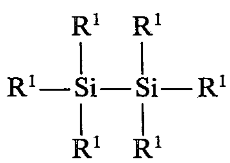

(III)

worin $R^1$ die vorgenannte Bedeutung besitzt, in Gegenwart von Palladiumkomplexverbindungen mit Ketonen und/oder Carbonsäureanhydriden und in Gegenwart von durch aliphatische oder aromatische Reste dreifach substituierten Phosphinen oder Phosphiten umsetzt.

Die Umsetzung kann für den Fall der Verwendung von 4-Chlorbenzoesäuremethylester und Hexamethyldisilan durch die folgenden Formeln wiedergegeben werden:

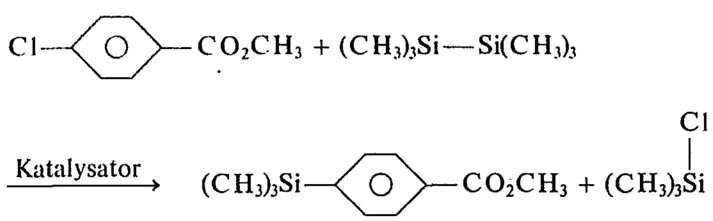


Im Hinblick auf die bekannten Verfahren liefert das Verfahren nach der Erfindung auf einfacherem und wirtschaftlicherem Wege aromatische Silane in besserer Ausbeute und Reinheit. Alle diese vorteilhaften Ergebnisse sind mit Bezug auf den Stand der Technik überraschend.

Die Disilane III können auf leichte Weise, z. B. nach dem in J. Organometal Chem., Band 13 (1968), Seiten 323—328 beschriebenen Verfahren, hergestellt werden. Sie können in stöchiometrischer Menge oder mit einem Überschuß umgesetzt werden, vorzugsweise in einer Menge von 0,5 bis 2,0, insbesondere 1,0 bis 1,3 Mol Ausgangsstoff III je Mol Ausgangsstoff II. Bevorzugte Ausgangsstoffe II und III und dementsprechend bevorzugte Endstoffe I sind solche, in deren Formeln die einzelnen Reste $R^1$ und $R^2$ gleich oder verschieden sein können und jeweils einen Alkylrest mit 1 bis 7 Kohlenstoffatomen, einen Cycloalkylrest mit 5 bis 8 Kohlenstoffatomen, einen Aralkylrest mit 7 bis 12 Kohlenstoffatomen, oder einen gegebenenfalls durch 1 bis 2 Chloratome, Bromatome, Alkylgruppen oder Alkoxygruppen mit jeweils 1 bis 4 Kohlenstoffatomen, Nitrogruppen und/oder Cyanogruppen substituierten Phenylrest bedeuten, darüber hinaus können die Reste $R^2$ auch jeweils ein Wasserstoffatom, ein Fluoratom, eine Nitrogruppe, eine Cyanogruppe, einen Rest

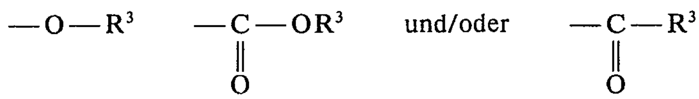


bezeichnen, worin $R^3$ für einen Alkylrest mit 1 bis 4 Kohlenstoffatomen, einen Cycloalkylrest mit 5 bis 8 Kohlenstoffatomen, einen Aralkyl- oder Alkylarylrest mit 7 bis 12 Kohlenstoffatomen, einen gegebenenfalls durch 1 bis 2 Chloratome, Bromatome, Alkylgruppen oder Alkoxygruppen mit jeweils 1 bis 4 Kohlenstoffatomen, Nitrogruppen und/oder Cyanogruppen substituierten Phenylrest steht, X ein Bromatom oder insbesondere ein Chloratom bedeutet. Die vorgenannten Reste können noch durch unter den Reaktionsbedingungen inerte Gruppen, z. B. Alkyl- oder Alkoxygruppen mit jeweils 1 bis 4 Kohlenstoffatomen, substituiert sein.

So kommen beispielsweise folgende Ausgangsstoffe II in Betracht: Chlorbenzol, Brombenzol; in 2-, 3- und 4-Stellung einfach oder in 2,3-, 2,4-, 2,5-, 2,6-, 3,5-, 3,4-Stellung gleich oder unterschiedlich zweifach oder in 2,3,4-, 2,4,6-, 3,4,5-, 2,4,5-, 2,5,6-Stellung gleich oder unterschiedlich dreifach durch eine Nitrogruppe, Cyanogruppe, einen Methyl-, Ethyl-, Propyl-, Isopropyl-, Butyl-, sek.-Butyl-, Isobutyl-, tert.-Butyl-, Methoxy-, Ethoxy-, Propoxy-, Isopropoxy-, Butoxy-, Isobutoxy-, sek.-Butoxy-, tert.-Butoxy-, Methylcarboxy-, Ethylcarboxy-, Propylcarboxy-, Isopropylcarboxy-, Butylcarboxy-, Isobutylcarboxy-, sek.-Butylcarboxy-, tert.-Butylcarboxy-, Methylcarbonyl-, Ethylcarbonyl-, Propylcarbonyl-, Isopropylcarbonyl-, Butylcarbonyl-, Isobutylcarbonyl-, sek.-Butylcarbonyl-, tert.-Butylcarbonyl-, Benzylcarbonyl-, Cyclohexylcarbonyl-, Phenylcarbonyl-, Benzyloxy-, Cyclohexyloxy-, Phenyloxy-, Benzylcarboxy-, Cyclohexylcarboxy-, Phenylcarboxy-rest substituierte Chlorbenzole; entsprechend substituierte Brombenzole.

So kommen beispielsweise folgende Ausgangsstoffe III in Frage: Hexamethyl-, Hexaethyl-, Hexapropyl-, Hexaisopropyl-, Hexabutyl-, Hexa-sek.-butyl-, Hexaisobutyl-, Hexa-tert.-butyl-, Tetramethyl-diethyl-, Hexabenzyl-, Hexacyclohexyl-, Hexaphenyl-disilan.

Die Umsetzung wird in der Regel bei einer Temperatur von 50 bis 250°C, vorteilhaft von 100 bis 200°C, insbesondere 130 bis 180°C, drucklos oder unter Druck, kontinuierlich oder diskontinuierlich durchgeführt. Zweckmäßig verwendet man unter den Reaktionsbedingungen inerte Lösungsmittel. Als Lösungsmittel kommen z. B. in Frage: aromatische Kohlenwasserstoffe, z. B. Toluol, Ethylbenzol, o-, m-, p-Xylol, Isopropylbenzol, Methylnaphthalin; Ether, z. B. Ethylpropylether, Methyl-tert.-butylether, n-Butylethylether, Di-n-butylether, Diisobutylether, Diisoamylether, Diisopropylether, Cyclohexylmethylether, Diethylether, Ethylenglykoldimethylether, Tetrahydrofuran, Dioxan; Ester wie Methylacetat, n-Propylacetat, Methylpropionat, Butylacetat, Ethylformiat, Phthalsäuremethylester, Benzoesäuremethylester, Essigester, Phenylacetat; Nitrile wie Acetonitril, Butyronitril, Isobutyronitril, Benzonitril, m-Chlorbenzonitril; Dimethylformamid, Diethylformamid, Dimethylacetamid, Diethylacetamid, N-Methylpyrrolidon; Sulfolan, Hexamethylphosphorsäuretriamid; aliphatische oder cycloaliphatische Kohlenwasserstoffe, z. B. Heptan, $\alpha$-Pinen, Pinan, Nonan, Benzinfraktionen innerhalb eines Siedepunktintervalls von 70 bis 190°C, Cyclohexan, Methylcyclohexan, Dekalin, Petrolether, Hexan, Ligroin, 2,2,4-Trimethylpentan, 2,2,3-Trimethylpentan, 2,3,3-Trimethylpentan, Octan; Ketone, z. B. Dialkylketone, Arylalkylketone; und entsprechende Gemische. Zweckmäßig verwendet man das Lösungsmittel in einer Menge von 100 bis 10 000 Gewichtsprozent, vorzugsweise von 200 bis 1000 Gewichtsprozent, bezogen auf Ausgangsstoff II.

Als Ketone bzw. Carbonsäureanhydride werden in der Regel solche verwendet, die mindestens 2 Carbonylgruppen, Dreifachbindungen und/oder Doppelbindungen tragen. Geeignete Anhydride sind z. B. Fumarsäureanhydrid, Zimtsäureanhydrid, Acrylsäureanhydrid, Ölsäureanhydrid, Propargylsäureanhydrid, Acetessigsäureanhydrid, Allylessigsäureanhydrid, Vinylessigsäureanhydrid und bevorzugt Maleinsäureanhydrid. Geeignete Ketone sind z. B. Acetylaceton, Bisacetylaceton, Acetondicarbonsäureanhydrid, Acetondioxalester, Acetonylaceton, Acetylbenzoyl, Acetylbrenztraubensäure, Benzalaceton, Dibenzalaceton; bevorzugt ist Dibenzalaceton. Im allgemeinen verwendet man 0,001 bis 0,2, insbesondere 0,01 bis 0,1 Grammatom Palladium je Mol Ausgangsstoff II und 0,5 bis 5,0, insbesondere 1,5 bis 4,5 Mol Keton- bzw. Anhydrid-Ligand je Grammatom Palladium.

Ebenfalls verwendet man trisubstituierte Phosphine und Phosphite als Zusatzkatalysatoren, im allgemeinen solche der Formeln

$$\begin{array}{c} R^4-P-R^4 \\ | \\ R^4 \end{array} \quad (IV) \quad \text{und} \quad \begin{array}{c} R^4-O-P-O-R^4 \\ | \\ O \\ | \\ R^4 \end{array} \quad (V)$$

worin die einzelnen Reste $R^4$ gleich oder verschieden sein können und jeweils einen aliphatischen Rest, bevorzugt einen Alkylrest mit 1 bis 6 Kohlenstoffatomen, oder einen aromatischen Rest, vorzugsweise einen gegebenenfalls durch Alkyl- oder Alkoxygruppen mit jeweils 1 bis 4 Kohlenstoffatomen, Bromatome, Chloratome, Nitrogruppen, Cyangruppen substituierten Phenylrest bedeuten. So sind beispielsweise geeignet als Stoffe IV und V: Trimethyl-, Triethyl-, Tripropyl-, Triisopropyl-, Tributyl-, Triisobutyl-, Tri-sek.-butyl-, Tri-tert.-butyl-, Triphenyl-phosphin; analog substituierte Phosphite. Im allgemeinen verwendet man den Zusatzkatalysator in einer Menge von 0,0001 bis 0,8, insbesondere 0,001 bis 0,4 Mol Phosphin bzw. Phosphit je Mol Ausgangsstoff II.

Die Reaktion kann wie folgt durchgeführt werden: Ein Gemisch der Ausgangsstoffe II, III, der Stoffe IV oder V und die Palladiumkomplexverbindung wird während 40 bis 60 Stunden bei der Reaktionstemperatur gehalten. Das Arbeiten unter Schutzgas ist nicht zwingend notwendig, nur beim Einsatz oxidationsempfindlicher Palladiumliganden ist die Verwendung von Stickstoff oder Argon zweckmäßig. Temperatur und Reaktionsdauer bei dem erfindungsgemäßen Verfahren hängen von der Natur der Substituenten am Aromaten ab. Zweckmäßig wird das Verfahren so durchgeführt, daß man den Palladiumkomplex zum Lösungsmittel zuführt und setzt dann den Stoff IV oder V zu. Die Ausgangsstoffe II und III werden zugeführt, dann wird im abgeschlossenen System auf 100 bis 200°C, vorzugsweise 130—180°C erhitzt. Die Reihenfolge der Zugabe der Verbindungen der Formeln II, III, IV, V und der Komplexverbindung und der verwendete Druck sind nicht kritisch. Der Endstoff wird in üblicher Weise abgetrennt, z. B. wird der Katalysator durch Zugabe von Kohlenwasserstoffen ausgefällt und abgetrennt, die Isolierung und Reinigung der Endprodukte I erfolgt nach dem Einengen des Lösungsmittels durch Destillation, Umkristallisation oder Chromatographie. Hervorzuheben sind zudem die Darstellung des unempfindlichen Silylierungskatalysators im Reaktionsgemisch, was aufwendige Isolierungsschritte vermeidet, und der nur geringe erforderliche Überschuß an Disilan der Formel III.

Die nach dem Verfahren der Erfindung erhältlichen aromatischen Silane sind wertvolle Zwischenprodukte für die Herstellung von Pharmazeutika, Farbstoffen und Schädlingsbekämpfungsmitteln. Bezüglich der Verwendung wird auf vorgenannte Druckschriften und auf DE-OS 2 507 929 oder EPA 6184 verwiesen.

Die in den folgenden Beispielen genannten Teile bedeuten Gewichtsteile.

### Beispiel 1

Zu einer Mischung von 9,84 Teilen 2-Chlornitrobenzol in 35 Teilen Xylol und 1,15 Teilen Dibenzalacetonpalladium werden 1,05 Teile Triphenylphosphin zugefügt. Nach 30 Minuten Rühren bei 22°C werden 11 Teile Hexamethyldisilan zugegeben. Man erhitzt im Rührautoklaven 30 Stunden auf 150°C; nach dem Abkühlen wird Petrolether zugegeben, vom Ungelösten filtriert und die Lösung im Vakuum eingeengt. Die gaschromatographische Analyse des Rückstandes zeigt eine Umsetzung von 92% der Theorie. Die anschließende Destillation ergibt 9,9 Teile 2-Nitrophenyltrimethylsilan, Siedepunkt 116—118°C/13,33 mbar (Ausbeute 82% der Theorie).

### Beispiel 2

Unter Stickstoff werden 11 Teile 3-Chlor-4-fluor-nitrobenzol, 35 Teile Xylol, 1,15 Teile Dibenzalaceton-palladium und 0,8 Teile Tri-n-butylphosphin 30 Minuten bei 22°C gerührt. Nach der Zugabe von 10 Teilen Hexamethyldisilan wird im Rührautoklaven 40 Stunden auf 150°C erhitzt. Man läßt abkühlen, fügt Petrolether zu, filtriert vom Ungelösten und engt die Lösung im Vakuum ein. Das Gaschromat-

gramm des Rückstandes zeigt eine Umsetzung von 93%, die Destillation ergibt 10,8 Teile 2-Fluor-5-nitrophenyl-trimethylsilan, Siedepunkt 58–60°C/0,133 mbar (Ausbeute 79% der Theorie).

## Beispiele 3 bis 16

Weitere Ergebnisse des erfindungsgemäßen Verfahrens, die entsprechend dem Beispiel 1 erhalten werden, sind in der Tabelle I zusammengefaßt. Spalte 2 zeigt die verwendeten Stoffe IV und Palladiumkatalysatoren sowie das Gewichtsverhältnis von Palladiumkatalysator und Stoff IV in jedem Beispiel.

Tabelle I

| Verbindung II | (dba = dibenzalaceton) Stoff IV und Katalysator | Ausbeute (% der Theorie) | Verbindung I | Physik. Daten |
|---|---|---|---|---|
| 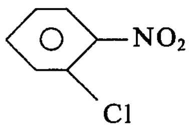 | $Pd(dba)_2 + 2{,}0\ P(C_6H_5)_3$ | 92 | 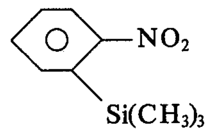 | Sdp. 116–118°C/10 mbar |
| 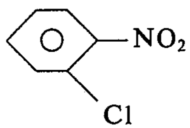 | $Pd(dba)_2 + 3{,}6\ P(C_6H_5)_3$ | 91 | 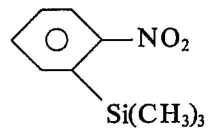 | Sdp. 116–118°C/10 mbar |
| 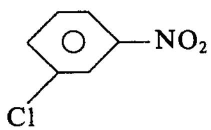 | $Pd(dba)_2 + 3{,}1\ P(C_6H_5)_3$ | 95 | 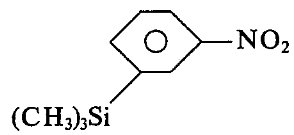 | Sdp. 126–127/10 mbar |
| 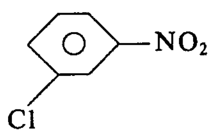 | $Pd(dba)_2$ | 0 | – | – |
| 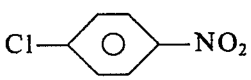 | $Pd(dba)_2 + 3{,}6\ P(C_6H_5)_3$ | 95 | 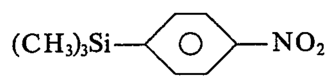 | Fp. 39–41°C |
| 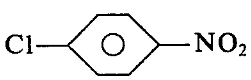 | $Pd(dba)_2 + 2{,}0\ P(C_6H_5)_3$ | 94 | 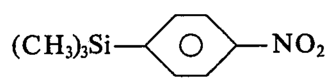 | Fp. 39–41°C |
| 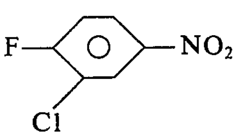 | $Pd(dba)_2 + 2{,}0\ P(C_6H_5)_3$ | 93 | 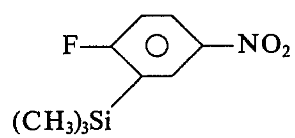 | Sdp. 58–60°C/0,1 mbar |

Fortsetzung

| Verbindung II | (dba = dibenzalaceton) Stoff IV und Katalysator | Ausbeute (% der Theorie) | Verbindung I | Physik. Daten |
|---|---|---|---|---|
| 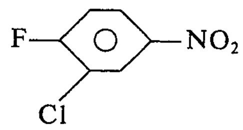 | $Pd(dba)_2$ + 3,1 $P(C_6H_5)_3$ | 91 | 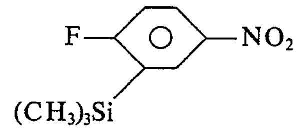 | Sdp. 58–60°C/0,1 mbar |
| 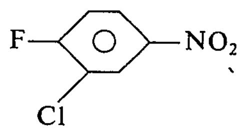 | $Pd(dba)_2$ + 2,0 $(n-C_4H_9)_3P$ | 92 | 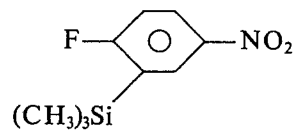 | Sdp. 58–60°C/0,1 mbar |
| 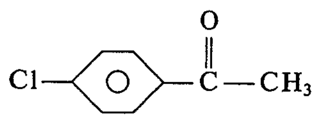 | $Pd(dba)_2$ + 2,0 $(C_6H_5)_3P$ | 60 | 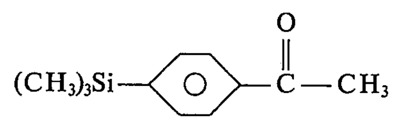 | Sdp. 141–143°C/20 mbar |
| 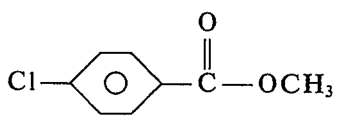 | $Pd(dba)_2$ + 2,0 $(C_6H_5)_3P$ | 90 | 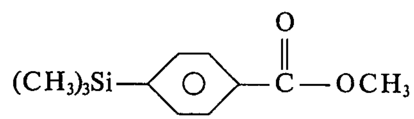 | Sdp. 133–135°C/20 mbar |
| 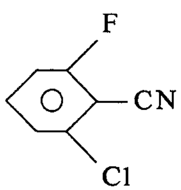 | $Pd(dba)_2$ + 2,0 $(C_6H_5)_3P$ | 65 | 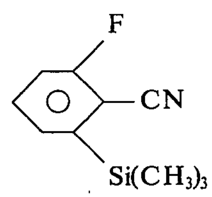 | Sdp. 118–120°C/29 mbar |
| 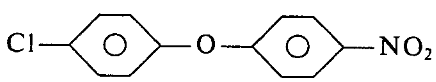 | $Pd(dba)_2$ + 2,0 $(C_6H_5)_3P$ | 40 | 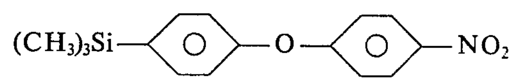 | $n_D^{20}$ = 1,5113 |

**Patentanspruch**

Verfahren zur Herstellung von aromatischen Silanen der Formel

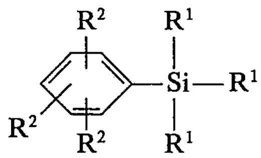
(I)

worin die einzelnen Reste $R^1$ und $R^2$ gleich oder verschieden sein können und jeweils einen aliphatischen, cycloaliphatischen, araliphatischen oder aromatischen Rest bedeuten, darüber hinaus die Reste $R^2$ auch jeweils ein Wasserstoffatom, ein Fluoratom, eine Nitrogruppe, eine Cyangruppe, den Rest

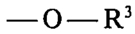 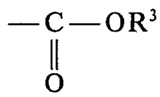 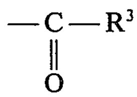

bezeichnen, worin $R^3$ für einen aliphatischen, cycloaliphatischen, araliphatischen oder aromatischen Rest steht, dadurch gekennzeichnet, daß man aromatische Halogenverbindungen der Formel

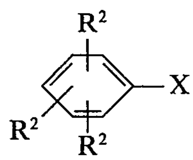
(II)

worin $R^2$ die vorgenannte Bedeutung besitzt und X ein Halogenatom bezeichnet, mit einem Disilan der Formel

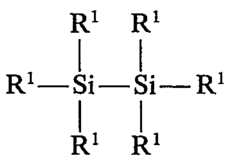
(III)

worin $R^1$ die vorgenannte Bedeutung besitzt, in Gegenwart von Palladiumkomplexverbindungen mit Ketonen und/oder Carbonsäureanhydriden und in Gegenwart von durch aliphatische oder aromatische Reste dreifach substituierten Phosphinen oder Phosphiten umsetzt.

**Claim**

A process for the preparation of aromatic silanes of the formula

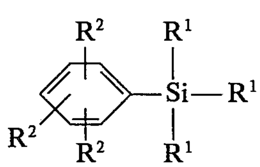
(I)

where the individual radicals $R^1$ and $R^2$ can be identical or different and each is an aliphatic, cycloaliphatic, araliphatic or aromatic radical, and each radical $R^2$ can also be hydrogen, fluorine, nitro, cyano,

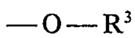 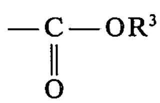 or 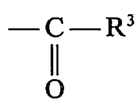

where $R^3$ is an aliphatic, cycloaliphatic, araliphatic or aromatic radical, wherein an aromatic,halogen compound of the formula

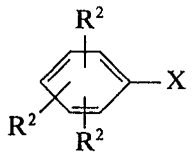

(II)

where $R^2$ has the above meaning and X is halogen, is reacted with a disilane of the formula

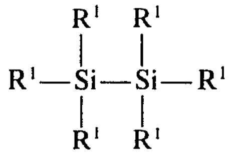

(III)

where $R^1$ has the above meaning, in the presence of a palladium complex with a ketone and/or a carboxylic acid anhydride, and in the presence of a phosphine or phosphite which is trisubstituted by aliphatic or aromatic radicals.

**Revendication**

Procédé de préparation de silanes aromatiques de la formule

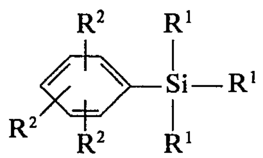

(I)

dans laquelle les divers substituants $R^1$ et $R^2$, qui peuvent être identiques ou différents, désignent chacun un groupe aliphatique, cycloaliphatique, araliphatique ou aromatique, chaque substituant $R^2$ pouvant en outre être choisi parmi l'atome d'hydrogène et l'atome de fluor et les groupes nitro, cyano ou

$—O—R^3$ 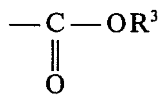 et 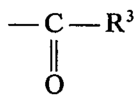

$R^3$ étant un groupe aliphatique, cycloaliphatique, araliphatique ou aromatique, caractérisé en ce que l'on fait réagir des composés aromatiques halogénés de la formule

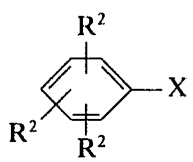

(II)

dans laquelle $R^2$ possède la signification définie et X représente un atome d'halogène, en présence de composés complexes du palladium et de cétones et(ou) d'anhydrides carboxyliques et en présence de phosphines ou de phosphites tri-substitués par des groupes aliphatiques ou aromatiques, avec un disilane de la formule

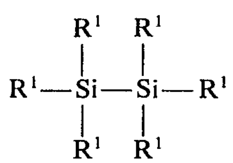

(III)

dans laquelle $R^1$ possède la signification définie.